# EUROPÄISCHE PATENTSCHRIFT

(11) **EP 2 748 481 B1**
(45) Veröffentlichungstag und Bekanntmachung des Hinweises auf die Patenterteilung: **21.01.2015**
(21) Anmeldenummer: 12743915.6
(22) Anmeldetag: 11.07.2012
(51) Int. Cl.: F16D 48/06

(54) **VERFAHREN ZUM BETREIBEN EINER ELEKTROMAGNETISCHEN KUPPLUNG SOWIE ELEKTROMAGNETISCHE KUPPLUNG**
METHOD FOR OPERATING AN ELECTROMAGNETIC CLUTCH, AND ELECTROMAGNETIC CLUTCH
PROCÉDÉ POUR FAIRE FONCTIONNER UN EMBRAYAGE ÉLECTROMAGNÉTIQUE ET EMBRAYAGE ÉLECTROMAGNÉTIQUE CORRESPONDANT

(30) Priorität: 24.08.2011 DE 102011052966
(43) Veröffentlichungstag der Anmeldung: 02.07.2014
(73) Patentinhaber: Kendrion (Markdorf) GmbH, 88677 Markdorf (DE)
(72) Erfinder: BENAVIDES, Monica, 88677 Markdorf (DE)
(74) Vertreter: Wagner, Kilian
(86) Internationale Anmeldenummer: PCT/EP2012/063566
(87) Internationale Veröffentlichungsnummer: WO 2013/026617

(56) Entgegenhaltungen:
- EP-A2- 2 236 845
- WO-A2-2010/097244
- US-A- 5 979 630

## Beschreibung

Die Erfindung betrifft ein Verfahren zum Betreiben einer elektromagnetischen Kupplung, insbesondere zum Betreiben eines Nebenaggregates in einem Kraftfahrzeug gemäß Anspruch 1, umfassend eine bestrombare Magnetspule (bestrombare Wicklung), eine Antriebsseite sowie eine damit kuppelbare (und entkuppelbare) Abtriebsseite. Ferner betrifft die Erfindung eine, vorzugsweise mit einem solchen Verfahren betreibbare oder betriebene elektromagnetische Kupplung gemäß Anspruch 8.

Elektromagnetische Kupplungen sind allgemein bekannt und werden häufig zum Betreiben von Nebenaggregaten in Kraftfahrzeugen, wie Kühler-Lüftern oder Klima-Kompressoren eingesetzt. Bekannte elektromagnetische Kupplungen umfassen einen antriebsseitigen Rotor und einen ortsfesten Magnetspulenträger, in den die Magnetspule zum Erzeugen eines magnetischen Feldes eingesetzt ist. Dem Rotor gegenüberliegend befindet sich eine Ankerscheibe, die von dem Rotor über einen Arbeitsluftspalt getrennt ist, wenn die Magnetspule nicht bestromt ist. Bei elektromagnetischen Kupplungen wird grundsätzlich unterschieden zwischen im bestromten Zustand geschlossenen Kupplungen, z.B. Bremsen, bekannt, bei denen die Trennung von Rotor und Ankerscheibe meist über ein Federelement erfolgt. Daneben sind im bestromten Zustand der Magnetspule geöffnete Kupplungen bekannt, bei denen Rotor und Ankerscheibe meist über ein Federelement (im nicht bestromten Zustand) reibschlüssig zusammengehalten werden. Die Abtriebsseite der Kupplung ist entweder fest mit dem Nebenaggregat verbunden oder über einen Riemenantrieb mit diesem gekoppelt.

Bekannt ist es, dass bei einem Schlupf zwischen Antriebs- und Abtriebsseite aufgrund eines sich ändernden Arbeitsluftspaltes eine Änderung des magnetischen Flusses resultiert. Diesen Effekt machen sich Schlupfüberwachungseinrichtungen zu Nutze, um einen unerwünschten, beispielsweise aus einer Überlast resultierenden Schlupf festzustellen, um in der Folge die Kupplung vollständig zu öffnen, um schlussendlich einen aus dem Schlupfen resultierenden Verschleiß oder einen Totalausfall aufgrund einer resultierenden Überhitzung zu vermeiden. Derartige Schlupfüberwachungsseinrichtungen sind beispielsweise in der DE 20 2006 017 623 U1 oder der DE 35 04 193 A1 beschrieben.

Insbesondere bei an sich bekannten elektromagnetischen Kupplungen, bei denen Antriebs- und Abtriebsseite relativ zueinander über ein Wälzlager verdrehbar gelagert sind, besteht häufig das Problem, dass es bei dem Wälzlager, mit dem sich die Antriebsseite gegenüber der Abtriebsseite abstützt zu Lagerschäden kommen kann, da die Wälzkörper bei geschlossener Kupplung nicht abrollen. Dadurch kann es zum einen zu einer mangelnden Lagerschmierung und daraus resultierenden Lagerschäden und darüber hinaus zu unerwünschten Stillstandsmarkierungen kommen.

Aus der US 5,662,553 A ist ein Verfahren zum Anfahren eines Motors bekannt, wobei hier zunächst die Kupplung so bestromt wird, dass sie schließt, woraufhin die Bestromung reduziert wird, um einen Schlupf zu provozieren. Gemäß der Lehre des Dokumentes wird die Kupplung dann im schleifenden Zustand gehalten, woraufhin schlussendlich die Kupplung wieder geschlossen wird. Hieraus resultiert ein vergleichsweiser hoher Kupplungsverschleiß. Ziel ist es, die Kupplung so zu nutzen, um möglichst hohe Drehmomente übertragen zu können. Die Druckschrift beschäftigt sich nicht mit der Verzögerung der Lageralterung und insbesondere nicht mit stillstandsbedingten Mangelschmierungen.

Ferner wird zum Stand der Technik die US 3,628,398 A genannt.

Die US 5 979 630 A offenbart ein Verfahren zum Betreiben einer elektromagnetischen Kupplung. Das bekannte Betriebsverfahren zeichnet sich dadurch aus, dass die Kupplung in einem Betriebszustand bewusst schlupfend betrieben wird, d.h. über einen langen Zeitraum im Schlupfzustand gehalten wird, um durch den Schlupf Kühlöl entlang der Reibpartner zu zirkulieren.

Die EP 2 236 845 A2 zeigt eine Antriebsanordnung mit einer Steuereinheit, die so ausgelegt ist, den Antrieb bei stillstehender Welle kurzzeitig zur Drehung anzusteuern, um die Welle um einen Drehwinkel weiter zu drehen, um hierdurch eine Relativposition zwischen dem Wälzkörper eines Wälzlagers und den Laufringen des Wälzlagers zu verändern.

Ausgehend von dem vorgenannten Stand der Technik liegt der Erfindung daher die Aufgabe zugrunde, ein Verfahren zum Betreiben einer elektromagnetischen Kupplung sowie eine, bevorzugt mit dem Verfahren betreibbare oder betriebene elektromagnetische Kupplung anzugeben, mit denen die Lageralterung eines, bevorzugt zwischen Antriebsseite und Abtriebsseite angeordneten, Wälzlagers verzögert werden kann. Insbesondere sollen stillstandsbedingte Mangelschmierungen reduziert, bevorzugt vermieden werden, wobei besonders bevorzugt der Kupplungsverschleiß minimal gehalten werden soll.

Diese Aufgabe wird hinsichtlich des Verfahrens mit den Merkmalen des Anspruchs 1 und hinsichtlich der, bevorzugt mit dem erfindungsgemäßen Verfahren betreibbaren oder betriebenen elektromagnetischen Kupplungen gemäß Anspruch 8 gelöst.

Vorteilhafte Weiterbildungen sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen verfahrensgemäß offenbarte Merkmale als vorrichtungsgemäß offenbart gelten und beanspruchbar sein, ebenso sollen vorrichtungsgemäß offenbarte Merkmale als verfahrensgemäß offenbart gelten und beanspruchbar sein.

Der Erfindung liegt der Gedanke zugrunde, die elektromagnetische Kupplung bewusst schlupfen zu lassen, indem die Bestromung der Magnetspule gezielt geändert wird, so dass es zu einer, bevorzugt geringen, Relativverdrehbewegung zwischen Antriebs- und Abtriebsseite kommt, aufgrund derer die Wälzkörper zumindest eines Wälzlagers der elektromagnetischen Kupplung abrollen, um hiermit Stillstandsschäden zu vermeiden. Um gleichzeitig den Betrieb eines über die elektromagnetische Kupplung angetriebenen Aggregates, insbesondere eines Nebenaggregates in einem Kraftfahrzeug, wie einen Lüfter oder Kompressor so wenig wie möglich zu stören, macht sich die Erfindung, die mit der bei einem Schlupf auftretenden Arbeitsspaltvergrößerung zusammenhängende Änderung des magnetischen Flusses zu Nutze, indem diese oder eine mit dieser in einem, vorzugsweise unmittelbaren, Zusammenhang stehende Änderung einer physikalischen Größe als Indikator für das Auftreten des Schlupfes detektiert wird, um dann als Reaktion hierauf, vorzugsweise unmittelbar oder nach einer definierten Zeit die elektromagnetische Kupplung, wieder (bevorzugt vollständig) zu schließen, um hierdurch den Schlupf zwischen Antriebsseite und Abtriebsseite zu beenden. Ganz besonders bevorzugt wird als Indikator für das Auftreten eines Schlupfes ein aus der Magnetfeldänderung resultierender Stromimpuls oder ein Spannungsimpuls (Impuls = Ausschlag, insbesondere dessen Flanke oder Peak) genutzt bzw. detektiert, der, vorzugsweise im Magnetspulenstromkreis oder alternativ in einem davon separaten Detektionsstromkreis, aufgrund der Magnetflussänderung bei beginnendem Schlupf induziert wird. Mit anderen Worten liegt der Erfindung also der Gedanke zugrunde, einen, eine kurze Zeitdauer von vorzugsweise weniger als 1 s, bevorzugt weniger als 0,5 s, noch weiter bevorzugt von etwa 0,1 s andauernden Schlupf zwischen der Antriebsseite und der Abtriebsseite einer elektromagnetischen Kupplung zu provozieren und den Schlupf, bzw. dessen Auftreten über die Detektion einer hieraus resultierenden Änderung des magnetischen Flusses oder der Detektierung einer mit der Änderung des magnetischen Flusses im Zusammenhang stehenden Änderung einer physikalischen Größe zu detektieren, um dann als Reaktion hierauf den Schlupf durch Schließen der Kupplung, genauer durch eine dies bewirkende Änderung der Bestromung der Magnetspule wieder zu beenden. Bevorzugt wird das zuvor erläuterte Verfahren mehrfach, insbesondere in vorgegebenen Zeitabständen und/oder zu bestimmten Zeitpunkten wiederholt, um hierdurch öfters, insbesondere regelmäßig eine Wälzkörperbewegung zu erreichen. Die Erfindung ist nicht auf den Einsatz bei Kupplungen mit einem Wälzlager beschränkt, dessen Wälzkörper sich bei eingekuppelter Kupplung nicht verdrehen. Die Erfindung bringt auch aufgrund des provozierten Schlupfimpulses für Wälzlager Schmierungsverbesserungen, bei denen die Wälzkörper bei eingekuppelter Kupplung abrollen.

Erfindungsgemäß wird die Schlupfdauer so eingestellt, dass sich Antriebsseite und Abtriebsseite während des Schlupfens weniger als 1080°, vorzugsweise weniger als 720°, bevorzugt weniger als 360° relativ zueinander verdrehen.

Wie bereits erläutert, ist es besonders bevorzugt, wenn als Indikator für einen Schlupf der Kupplung ein hiermit in Zusammenhang stehender Stromimpuls oder Spannungsimpuls detektiert wird, da eine solche Impulserkennung weitgehend unabhängig ist von äußeren Bedingungen, wie der Spannungsversorgung, dem Luftspalt, der Abtriebs- oder Antriebsdrehzahl sowie einem unvermeidlichen betriebsbedingten Verschleiß der Kupplung. Die Impulserkennung ist somit besonders zuverlässig als Indikator für das Erkennen des bewusst provozierten Schlupfes heranzuziehen.

Weiterbildungsgemäß ist mit besonderem Vorteil vorgesehen, dass der vorerwähnte Strom- oder Spannungsimpuls unmittelbar in dem zum bestromen der Magnetspule zum Erzeugen eines die Kupplung schließenden oder öffnenden Magnetfeldes dienenden Magnetspulenstromkreis detektiert wird, insbesondere durch das Vorsehen von entsprechenden Strom- oder Spannungsmessmitteln in und/oder an dem Magnetspulenstromkreis. Bevorzugt wird dabei auf einen separaten Detektionsstromkreis oder etwa eine Sensorspule zur unmittelbaren Detektion der Änderung des magnetischen Flusses verzichtet.

Je nach Ausführung der elektromagnetischen Kupplung als bei Bestromung der Magnetspule geschlossener Kupplung oder bei Bestromung der Magnetspule geöffneter Kupplung wird, insbesondere von geeigneten Steuermitteln zum Provozieren des Schlupfes zwischen der Abtriebsseite und der Antriebsseite, d.h., zum zumindest, bevorzugt ausschließlich, teilweisen Öffnen der Kupplung die Bestromung der Magnetspule im Magnetspulenstromkreis, vorzugsweise bis auf null, reduziert bzw., vorzugsweise bis zum Erreichen eines Betriebsstroms, erhöht. Wesentlich ist es, dass bewusst ein Schlupf, also eine, vorzugsweise schleifende (reibende), Relativdrehbewegung zwischen Antriebs- und Abtriebsseite resultiert, die dann geeignet in erfindungsgemäßer Weise detektiert wird, um als Reaktion hierauf dann das Schlupfen einer entsprechend gegenläufigen Änderung der Bestromung zu beenden.

Besonders bevorzugt ist in Weiterbildung der Erfindung vorgesehen, nach beginnendem Schlupf ein schnelles Wieder-Schließen der Kupplung zu gewährleisten, insbesondere um zu verhindern, dass die elektromagnetische Kupplung und dort insbesondere die Reibflächen nicht unzulässig überhitzen und/oder um eine Beeinträchtigung des Betriebs eines mit der Kupplung betriebenen Aggregates, insbesondere eines Nebenaggregates, wie eines Kompressors, bevorzugt einer Kühl- und/oder Klimaanlage möglichst weitgehend zu vermeiden. Um dies zu gewährleisten ist in Weiterbildung der Erfindung mit Vorteil vorgesehen, dass die Bestromung weniger als 2,0 s, vorzugsweise weniger als 1,0 s, bevorzugt weniger als 0,5 s, noch weiter bevorzugt zwischen 0,05 s und 0,02 s unterbrochen wird oder bei einem alternativen Kupplungsaufbau auf dem Betriebsstromniveau gehalten wird, mit der Folge, dass der Schlupf eine nur sehr begrenzte Zeit andauert. Ganz besonders bevorzugt ist es, wenn die Kupplung bei nur etwa 100 ms abgeschaltet wird.

Besonders bevorzugt ist es, wenn die elektromagnetische Kupplung derart ausgelegt wird und/oder Ansteuerparameter, insbesondere Reaktionszeiten der Steuer- und/oder Detektionsmittel so eingestellt bzw. gewählt werden, dass eine Abtriebsdrehzahl einer ein Aggregat, insbesondere ein Nebenaggregat, antreibenden Kupplung durch das provozierte Schlupfen weniger als 30%, vorzugsweise weniger als 25, noch weiter bevorzugt weniger als 20% (gegenüber einer Drehzahl vor einsetzendem Schlupf) ändert. Wird beispielsweise mittels der Kupplung ein Kompressor einer Klimaanlage betrieben, sollte die Drehzahlveränderung aufgrund des Schlupfes im inneren des Busses nicht wahrgenommen werden bzw. der Volumenstrom im Kompressor sollte, zumindest nicht merklich, beeinträchtigt werden.

Bevorzugt wird bis zum Beginn des Kupplungsschließens nach der Detektion der Änderung des magnetischen Flusses und/oder der Änderung der hiermit zusammenhängenden physikalischen Größe ein Drehmoment übertragen - d.h. die Reibpartner verlieren während des gesamten Verfahrensablaufs nicht den Reibkontakt zueinander.

Zur Reduzierung eines ungewollten Verschleißes der Reibpartner der Kupplung ist es bevorzugt, wenn die Schlupfdauer, d.h. die Zeiten, in denen sich Antriebs- und Abtriebsseite provoziert relativ zueinander verdrehen so eingestellt bzw. gewählt wird, dass sich Antriebs- und Abtriebsseite maximal drei Umdrehungen, vorzugsweise maximal zwei Umdrehungen, besonders bevorzugt maximal eine Umdrehung relativ zueinander Verdrehen. Bevorzugt beträgt ein Mindestrelativverdrehwinkel 1°, um somit die unerwünschten Lagerschäden zu vermeiden.

Grundsätzlich ist das erfindungsgemäße Verfahren bei allen elektromagnetischen Kupplungen anwendbar - besondere Vorteile werden bei Kupplungen erreicht, bei denen die Antriebsseite gegenüber der Abtriebsseite über mindestens ein, mehrere Wälzkörper umfassendes Wälzlager gelagert ist, wobei sich noch weiter bevorzugt das Wälzlager radial zwischen Antriebs- und Abtriebseite befindet und/oder die Wälzkörper sich nur bei einer, beispielsweise schlupfbedingten Relativbewegung zwischen Antriebs- und Abtriebsseite abrollen. Bevorzugt stützen sich Antriebs- und Abtriebseite in radialer Richtung über vorerwähntes Wälzlager gegeneinander ab.

Die Erfindung führt auch auf eine elektromagnetische Kupplung, die bevorzugt betrieben wird oder zumindest betreibbar ist gemäß einem zuvor erläuterten Verfahren. Zum Ändern der Bestromung der Magnetspule zum Provozieren des gewünschten Schlupfes zwischen Antriebsseite und Abtriebsseite sind entsprechende, die Bestromung der Magnetspule steuernde Steuermittel vorhanden, welche signalleitend mit Detektionsmitteln zum Detektieren einer aus dem beginnenden Schlupf und einer damit zusammenhängenden Arbeitsspaltvergrößerung resultierenden markanten Änderung des Magnetflusses oder einer damit im Zusammenhang stehenden Änderung einer physikalischen Größe ausgebildet und bestimmt sind, insbesondere betrieben werden. Ganz besonders bevorzugt sind die Detektionsmittel ausgebildet bestimmt und angeordnet zum Detektieren eines aus der provozierten Arbeitsspaltvergrößerung resultierenden Stromimpulses oder eines Spannungsimpulses, insbesondere im Magnetspulenstromkreis. Die Steuermittel sind ausgebildet und bestimmt dass diese als Reaktion auf das Detektieren vorgenannter Änderung die Bestromung der Magnetspule (bestrombare Wicklung) derart ändern, dass die elektromagnetische Kupplung geschlossen und somit der Schlupf unterbunden wird. Besonders zweckmäßig ist es, wenn die Detektionsmittel einen signalleitend mit den Steuermitteln, der bevorzugt von einem Mikrokontroller gebildet wird, verbundenen Strom- oder Spannungsmesser umfassen, der noch weiter bevorzugt im Magnetspulenstromkreis angeordnet ist.

Mit besonderem Vorteil ist vorgesehen, dass die Strommessmittel so ausgewählt sind, dass diese eine Messauflösung von mindestens 15 mA, ganz besonders bevorzugt um mindestens 5 mA aufweisen, um zuverlässig auch entsprechend geringe, schlupfbedingte Stromimpulse detektieren zu können.

Als besonders zweckmäßig hat es sich erwiesen, wenn die Steuermittel einen Mikrokontroller umfassen und die Detektionsmitttel einen A/D-Wandler, welcher signalleitend mit dem Mikrocontroller verbunden ist, ganz besonders bevorzugt in diesem integriert ist.

Weitere Vorteile, Merkmale und Einzelheiten der Erfindung ergeben sich aus der nachfolgenden Beschreibung bevorzugter Ausführungsbeispiele sowie anhand der Zeichnungen.
Diese zeigen in:
- Fig. 1: in einer unvollständigen, geschnittenen Längsansicht einen möglichen Aufbau einer elektromagnetischen Kupplung,
- Fig. 2: eine mögliche Anordnung von Detektions- und Steuermitteln zum Provozieren eines Schlupfes der elektromagnetischen Kupplung und zum Reagieren auf dessen Eintreten, und
- Fig. 3: einen möglichen Stromverlauf in der im Magnetspulenstromkreis als Reaktion auf das Auftreten einer Arbeitsluftspaltvergrößerung.

In den Figuren sind gleiche Elemente und Element mit der gleichen Funktion mit dem gleichen Bezugszeichen gekennzeichnet.

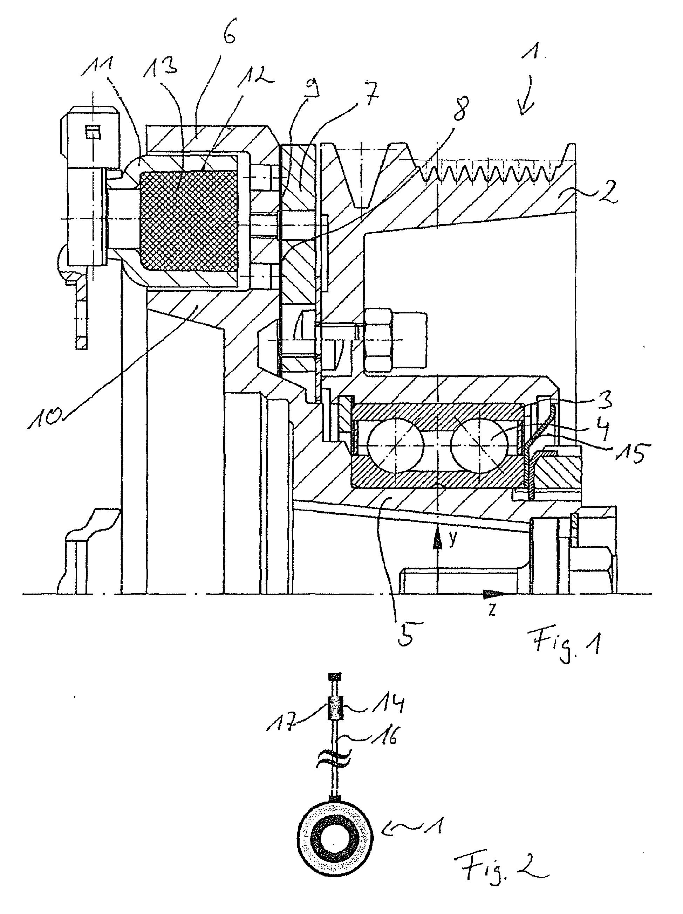

In Fig. 1 ist ein oberer Teil einer elektromagnetischen Kupplung 1 gezeigt, wie sie beispielsweise für den Betrieb eines Kältekompressors für eine Klimaanlage in einem Omnibus vorgesehen ist. Im vorliegenden Ausführungsbeispiel ist die Kupplung als einstufige Kupplung ausgebildet, kann alternativ jedoch auch als mehrstufige Kupplung ausgebildet werden, beispielsweise in dem Wirbelstromkupplungselemente zusätzlich zu einem elektromagnetisch schaltbaren Kupplungsteil vorgesehen sind.

Die Kupplung 1 umfasst eine Antriebsseite 2, die beispielsweise über einen Riemen mit einem nicht dargestellten Antriebsmotors eines Kraftfahrzeugs in Wirkverbindung steht. Die Antriebsseite 2 ist über ein hier als Doppelreihenkugellager ausgebildetes Wälzlager 3, umfassend mehrere, in Umfangsrichtung nebeneinander angeordnete Wälzkörper 4 auf einer Nabe 5 eines Abtriebsteils 6 gelagert. Das Abtriebsteil 6 steht über die Nabe 5 drehmomentübertragend mit einem nicht dargestellten Aggregat in Wirkverbindung.

An Stelle eines dargestellten doppelreihigen Kugellagers können auch andere Wälzlager eingesetzt werden, die sich sowohl in der Art der Wälzkörper als auch in der Anzahl der Wälzkörperreihen unterscheiden können.

An einer inneren Stirnseite der Antriebsseite 2 (Antriebsbaugruppe) ist eine Ankerscheibe 7 festgelegt. In der Darstellung gemäß Fig. 1 liegt die Ankerscheibe 7 mit einer stirnseitigen Fläche 8 (Reibfläche) an einer gegenüberliegenden Fläche 9 eines Rotors 10 der Abtriebsseite 6 (Abtriebsbaugruppe) an. Zwischen den beiden Flächen 8, 9 kann durch Öffnen der Kupplung ein Arbeitsluftspalt gebildet werden.

Dem Rotor 10 des Abtriebsteils 6 ist ein ortsfester Magnetspulenträger 11 zugeordnet. In einer Nut 12 des Magnetspulenträgers 11 befindet sich eine bestrombare Magnetspule 13. Die Bestromung der Magnetspule 13 ist über schematisch in Fig. 2 angedeutete Steuermittel 14 steuerbar.

In dem gezeigten Ausführungsbeispiel handelt es sich um eine im bestromten Zustand geschlossene Kupplung, wobei der Ankerscheibe 7 zum Öffnen ein Federelement 15 zugeordnet ist, welches die Kupplung 1 bei Unterschreiten einer bestimmten, bestromungsabhängigen Magnetfeldstärke bei gegebener Last öffnet, indem Antriebs- und Abtriebsseite axial relativ zueinander verstellt werden.

In Fig. 2 ist schematisch die elektromagnetische Kupplung 1 samt Magnetspulestromkreis 16 dargestellt. Über den Magnetspulenstromkreis 16 wird die Magnetspule zum Erzeugen eines magnetischen Feldes zum Schließen (oder bei einer alternativen Ausführungsform zum Öffnen) der Kupplung mit der notwendigen Stromstärke versorgt. In den Magnetspulenstromkreis 16 sind hier als Baugruppe dargestellte Detektionsmittel 17 und Steuermittel 14 integriert. Die Steuermittel 14 sind so ausgebildet, dass diese, bevorzugt in regelmäßigen Abständen während des geschlossenen Betriebs der elektromagnetischen Kupplung 1 einen Schlupf zwischen Antriebsseite 2 und Abtriebsseite 6 provozieren, der mittels der Detektionsmittel 17 detektiert wird. Dabei wird sich der physikalische Effekt zu Nutze gemacht, dass einhergehend mit beginnendem Schlupf sich ein Arbeitsluftspalt zwischen Antriebs- und Abtriebsseite bildet bzw. vergrößert, wodurch, hier im Magnetspulenstromkreis 16, ein Stromimpuls entsteht (indiziert wird), welcher mit Hilfe der Detektionsmittel 17 erkannt wird. Die Detektionsmittel 17 signalisieren dies den Steuermitteln 14, die als Reaktion auf das Erkennen des Stromimpulses entweder unmittelbar oder nach einer vorgegebenen oder vorgebbaren Reaktionszeit die Bestromung der Magnetspule so ändern, in dem gezeigten Ausführungsbeispiel wieder auf Betriebsstromniveau bringen, so dass die Kupplung nach sehr kurzer Schlupfdauer wieder geschlossen und somit der Schlupf unterbunden wird. Während dieses Schlupfes verdrehen sich die Wälzkörper 4 des Wälzlagers 3. Bevorzugt ist die Schlupfdauer so gewählt, dass sich Lagerringe des Lagers um mindestens 1° zueinander verdrehen - dabei sollte die Zeit so bemessen werden, dass keine unzulässige Erhitzung der Reibpartner (hier also von Rotor 10 und Ankerscheibe 7) resultiert.

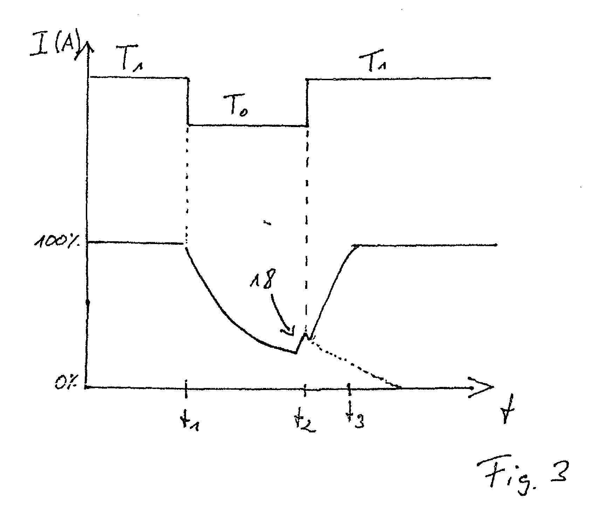

In Fig. 3 ist ein beispielhafter Stromverlauf über die Zeit gezeigt sowie ein zugeordnetes Steuersignal T1 = Bestromung an bzw. T0 = Bestromung aus, mit welchem beispielsweise ein Mikrokontroller der Steuermittel ein entsprechendes Leistungsbauteil, insbesondere einen Schalter, bevorzugt in Form eines Relais ansteuert.

Bis zum Erreichen des Zeitpunktes t1 liegt am Schalter das Steuersignal T1 an. Die Bestromung der Magnetspule beträgt 100%, d.h. die Magnetspule wird mit einem vorgegebenen Betriebsstrom bestromt. Zum Provozieren eines Schlupfes wird nun zum Zeitpunkt t1 von dem Mikrokontroller der Steuermittel der Schalter mit dem Steuersignal T0 angesteuert. In der Folge wird die Bestromung der Magnetspule unterbrochen und der Strom im Magnetspulenstromkreis fällt ab. Sobald das Magnetfeld in der Folge der Bestromungsunterbrechung einen bestimmten Wert unterschreitet, beginnen Antriebsseite und Abtriebsseite sich relativ zueinander, im Regelfall schleifend zu verdrehen und es bildet bzw. vergrößert sich ein Arbeitsluftspalt zwischen Antriebs- und Abtriebsseite. In dem gezeigten Ausführungsbeispiel wird zum Zeitpunkt t2 eine mit der Arbeitsspaltvergrößerung einhergehende Änderung des magnetischen Flusses oder, wie in dem gezeigten Ausführungsbeispiel ein hier in einem physikalischen Zusammenhang stehender Stromimpuls 18 detektiert und die Steuermittel geben als Reaktion hierauf ein Steuersignal T1 an den zugehörigen Schalter weiter, so dass die Bestromung der Magnetspule wieder erfolgt - in der Folge steigt der Strom wieder auf 100%. Dieser Wert wird zum Zeitpunkt t3 erreicht. Bevorzugt beträgt die Dauer der Bestromungsunterbrechung (Zeitspanne zwischen t1 und t2) etwa 100 ms.

In Fig. 3 ist lediglich der Vollständigkeit halber der Stromverlauf gepunktet für den Fall dargestellt, dass die Bestromung nicht mehr aktiviert würde.

### Bezugszeichenliste

- 1: Kupplung
- 2: Antriebsseite
- 3: Wälzlager
- 4: Wälzkörper
- 5: Nabe
- 6: Abtriebsseite
- 7: Ankerscheibe
- 8: Fläche
- 9: Fläche
- 10: Rotor
- 11: Magnetspulenträger
- 12: Nut
- 13: Magnetspule
- 14: Steuermittel
- 15: Federelement
- 16: Magnetspulenstromkreis
- 17: Detektionsmittel
- 18: Stromimpuls

## Patentansprüche

1. Verfahren zum Betreiben einer elektromagnetischen Kupplung (1) zur Vermeidung von Stillstandsschäden eines Wälzlagers der Kupplung (1), insbesondere zum Betreiben eines Nebenaggregates in einem Kraftfahrzeug, wobei die Kupplung (1) eine bestrombare Magnetspule (13), ein Wälzlager, eine Antriebsseite (2) sowie eine damit kuppelbare Abtriebsseite (6) umfasst, mit den Schritten:
Ändern der Bestromung der Magnetspule (13) zum Provozieren eines Schlupfes zwischen Antriebsseite (2) und Abtriebsseite (6),
Detektieren einer aus dem beginnenden Schlupf und einer damit zusammenhängenden Arbeitsspaltvergrößerung resultierenden markanten Änderung des magnetischen Flusses oder einer damit in Zusammenhang stehenden Änderung einer physikalischen Größe, insbesondere Detektieren eines Stromimpulses (18) oder eines Spannungsimpulses,
Änderung der Bestromung der Magnetspule (13) zum Schließen der Kupplung (1) und Beenden des Schlupfes als Reaktion auf das Detektieren der Änderung des magnetischen Flusses oder der Änderung der physikalischen Größe, **dadurch gekennzeichnet dass**, die Schlupfdauer so eingestellt wird, dass sich Antriebsseite (2) und Abtriebsseite (6) während des Schlupfens weniger als 1080°, vorzugsweise weniger als 720°, bevorzugt weniger als 360° relativ zueinander verdrehen.

2. Verfahren nach Anspruch 1,
**dadurch gekennzeichnet,**
**dass** die Änderung des magnetischen Flusses oder der damit in Zusammenhang stehenden Größe im Magnetspulenstromkreis (16) detektiert wird, insbesondere durch das Vorsehen von Strom- oder
Spannungsmessmitteln im und/oder am Magnetspulenstromkreis (16).

3. Verfahren nach einem der Ansprüche 1 oder 2,
**dadurch gekennzeichnet,**
**dass** die Bestromung zum Provozieren des Schlupfes reduziert, insbesondere unterbrochen, wird, oder dass die Bestromung zum Provozieren des Schlupfes, insbesondere bei einer als Bremse dienenden Kupplung (1), bevorzugt auf einen Betriebsstrom, erhöht wird.

4. Verfahren nach Anspruch 3,
**dadurch gekennzeichnet,**
**dass** die Bestromung weniger als 2,0s, vorzugsweise weniger als 1,0s, bevorzugt weniger als 0,5s, noch weiter bevorzugt zwischen 0,05s und 0,2s unterbrochen wird oder auf dem Betriebsstromniveau gehalten wird.

5. Verfahren nach einem der vorhergehenden Ansprüche,
**dadurch gekennzeichnet,**
**dass** die Schlupfdauer so eingestellt wird, dass sich eine Abtriebsdrehzahl weniger als 30%, vorzugsweise weniger als 25%, bevorzugt weniger als 20% ändert.

6. Verfahren nach einem der vorhergehenden Ansprüche,
**dadurch gekennzeichnet,**
**dass** die Antriebsseite (2) gegenüber der Abtriebsseite (6) über mindestens ein, mehrere Wälzkörper (4) umfassendes Wälzlager (3) gelagert ist, dessen Wälzkörper (4) bei eingekuppelter Kupplung (1) nicht abrollen und dass die Wälzkörper (4) während der Schlupfdauer abrollen.

7. Elektromagnetische Kupplung (1), insbesondere zum Betreiben eines Nebenaggregates in einem Kraftfahrzeug, umfassend eine bestrombare Magnetspule (13) ein Wälzlager, eine Antriebsseite (2) sowie eine damit kuppelbare Abtriebsseite (6), mit Steuermitteln zum Ändern der Bestromung der Magnetspule (13) zum Provozieren eines Schlupfes zwischen Antriebsseite (2) und Abtriebsseite (6), mit signalleitend mit den Steuermitteln (14) ausgebildeten Detektionsmitteln (17) zum Detektieren einer aus dem beginnenden Schlupf und einer damit zusammenhängenden Arbeitsspaltvergrößerung resultierenden markanten Änderung des magnetischen Flusses oder einer damit in Zusammenhang stehenden Änderung einer physikalischen Größe, insbesondere Detektieren eines Stromimpulses (18) oder eines Spannungsimpulses, wobei die Steuermittel (14) ausgebildet und bestimmt sind, um als Reaktion auf das Detektieren der Änderung des magnetischen Flusses oder der Änderung der physikalischen Größe die Bestromung der Magnetspule (13), zur Schließen der Kupplung (1) und Beenden des Schlupfes zu ändern, **dadurch gekennzeichnet dass**, die Schlupfdauer so eingestellt ist, dass sich Antriebsseite (2) und Abtriebsseite (6) während des Schlupfens weniger als 1080°, vorzugsweise weniger als 720°, bevorzugt weniger als 360° relativ zueinander verdrehen.

8. Kupplung (1) nach Anspruch 7,
**dadurch gekennzeichnet,**
**dass** die Detektionsmittel (17) eine Sensorspule zum Detektieren der Änderung des magnetischen Flusses, insbesondere im Magnetspulenstromkreis (16) umfassen oder dass die Sensormittel eines im Magnetspulenstromkreis (16) angeordneten Strom- oder Spannungsmesser umfassen.

9. Kupplung (1) nach Anspruch 8,
**dadurch gekennzeichnet,**
**dass** die Strommessmittel eine Messauflösung von mindestens 15 mA, vorzugsweise mindestens 5 mA aufweisen.

10. Kupplung (1) nach einem der Ansprüche 7 bis 9,
**dadurch gekennzeichnet,**
**dass** die Steuermittel (14) einen Mikrokontroller und die Detektionsmittel (17) einen A/D-Wandler umfassen, der signalleitend mit dem Mikrokontroller verbunden, bevorzugt in diesem integriert ist.

11. Kupplung (1) nach einem der Ansprüche 7 bis 10,
**dadurch gekennzeichnet,**
**dass** die Antriebsseite (2) gegenüber der Abtriebsseite (6) über mindestens ein, mehrere Wälzkörper (4) umfassendes Wälzlager (3) gelagert ist, dessen Wälzkörper (4) bei eingekuppelter Kupplung (1) nicht abrollen und dass die Wälzkörper (4) während des Schlupfes zwischen Antriebs- und/Abtriebsseite (2,6) abrollen.

## Claims

1. A method for operating an electromagnetic clutch (1) for preventing standstill damages to a rolling bearing of the clutch (1), particularly for operating an auxiliary unit in a motor vehicle, wherein the clutch (1) comprises a magnetic coil (13) that can be energized, a rolling bearing, a drive side (2) and an output side (6) that can be coupled thereto, comprising the steps of:
changing the energization of the magnetic coil (13) in order to provoke slippage between the drive side (2) and the output side (6),
detecting a distinctive change of the magnetic flux or an associated change of a physical quantity resulting from the beginning slippage and an associated working gap increase, particularly detecting a current pulse (18) or a voltage pulse,
changing the energization of the magnetic coil (13) in order to engage the clutch (1) and to stop the slippage in response to the detection of the change of the magnetic flux or the change of the physical quantity, **characterized in that** the slippage period is adjusted in such a way that the drive side (2) and the output side (6) turn relative to one another by less than 1080°, preferably less than 720°, particularly less than 360°, while slippage occurs.

2. The method according to Claim 1,
**characterized in**
**that** the change of the magnetic flux or of the associated quantity is detected in the magnetic coil circuit (16), particularly by providing current measuring means or voltage measuring means in and/or on the magnetic coil circuit (16).

3. The method according to Claim 1 or 2,
**characterized in**
**that** the energization is reduced, particularly interrupted, in order to provoke slippage or that the energization is preferably increased to an operating current in order to provoke slippage, particularly in a clutch (1) that serves as a brake.

4. The method according to Claim 3,
**characterized in**
**that** the energization is interrupted or maintained at the operating current level for a period of less than 2.0s, preferably less than 1.0s, particularly less than 0.5s, especially between 0.05s and 0.2s

5. The method according to one of the preceding claims,
**characterized in**
**that** the slippage period is adjusted in such a way that the output speed changes by less than 30%, preferably less than 25%, particularly less than 20%.

6. The method according to one of the preceding claims,
**characterized in**
**that** the drive side (2) is supported relative to the output side (6) by means of at least one rolling bearing (3) that comprises several rolling bodies (4), wherein the rolling bodies (4) of the rolling bearing do not carry out a rolling motion when the clutch (1) is engaged, and in that the rolling bodies (4) carry out a rolling motion while slippage occurs.

7. An electromagnetic clutch (1), particularly for operating an auxiliary unit in a motor vehicle, comprising a magnetic coil (13) that can be energized, a rolling bearing, a drive side (2) and an output side (6) that can be coupled thereto, as well as control means for changing the energization of the magnetic coil (13) in order to provoke slippage between the drive side (2) and the output side (6) and detection means (17) that are connected to the control means (14) in a signal-conducting fashion and serve for detecting a distinctive change of the magnetic flux or an associated change of a physical quantity resulting from the beginning slippage and an associated working gap increase, particularly for detecting a current pulse (18) or a voltage pulse, wherein the control means (14) are intended and designed for changing the energization of the magnetic coil (13) in response to the detection of the change of the magnetic flux or the change of the physical quantity in order to engage the clutch (1) and stop the slippage, **characterized in that** the slippage period is adjusted in such a way that the drive side (2) and the output side (6) turn relative to one another by less than 1080°, preferably less than 720°, particularly less than 360°, while slippage occurs.

8. The clutch (1) according to Claim 7,
**characterized in**
**that** the detection means (17) comprise a sensor coil for detecting the change of the magnetic flux, particularly in the magnetic coil circuit (16), or that the sensor means comprise an ampere meter or voltage meter arranged in the magnetic coil circuit (16) .

9. The clutch (1) according to Claim 8,
**characterized in**
**that** the current measuring means have a measuring resolution of at least 15 mA, preferably at least 5 mA.

10. The clutch (1) according to one of Claims 7 to 9,
**characterized in**
**that** the control means (14) comprise a microcontroller and the detection means (17) comprise an A/D converter that is connected to the microcontroller in a signal-conducting fashion, preferably integrated therein.

11. The clutch (1) according to one of Claims 7 to 10,
**characterized in**
**that** the drive side (2) is supported relative to the output side (6) by means of at least one rolling bearing (3) that comprises several rolling bodies (4), wherein the rolling bodies (4) of the rolling bearing do not carry out a rolling motion when the clutch (1) is engaged, and in that the rolling bodies (4) carry out a rolling motion while slippage between the drive side and the output side (2, 6) occurs.

## Revendications

1. Procédé pour faire fonctionner un embrayage électromagnétique (1) pour éviter les endommagements à l'arrêt d'un palier à roulement de l'embrayage (1), en particulier pour faire fonctionner un organe secondaire dans un véhicule automobile, l'embrayage (1) comprenant une bobine magnétique (13) pouvant être alimentée en courant électrique, un palier à roulement, un côté d'entraînement (2) ainsi qu'un côté de sortie (6) pouvant être accouplé à celui-ci, comprenant les étapes suivantes :
variation de l'alimentation en courant électrique de la bobine magnétique (13) pour provoquer un glissement entre le côté d'entraînement (2) et le côté de sortie (6),
détection d'une variation notable du flux magnétique résultant du début du glissement et d'une augmentation de la fente de travail associée à celui-ci, ou d'une variation associée d'une grandeur physique, en particulier détection d'une impulsion de courant électrique (18) ou d'une impulsion de tension,
variation de l'alimentation en courant électrique de la bobine magnétique (13) pour fermer l'embrayage (1) et terminer le glissement en réaction à la détection de la variation du flux magnétique ou de la variation de la grandeur physique, **caractérisé en ce que** la durée du glissement est ajustée de telle sorte que le côté d'entraînement (2) et le côté de sortie (6) pendant le glissement tournent l'un par rapport à l'autre de moins de 1080°, de préférence de moins de 720°, préférablement de moins de 360°.

2. Procédé selon la revendication 1,
**caractérisé en ce que**
la variation du flux magnétique ou de la grandeur associée à celui-ci dans le circuit électrique de la bobine magnétique (16) est détectée, en particulier en prévoyant des moyens de mesure de courant ou de tension dans et/ou au niveau du circuit électrique de la bobine magnétique (16).

3. Procédé selon l'une quelconque des revendications 1 ou 2,
**caractérisé en ce que**
l'alimentation en courant électrique pour provoquer le glissement est réduite, notamment interrompue, ou **en ce que** l'alimentation en courant électrique pour provoquer le glissement, en particulier dans le cas d'un embrayage (1) fonctionnant en tant que frein, est augmentée, de préférence à un courant électrique de fonctionnement.

4. Procédé selon la revendication 3,
**caractérisé en ce que**
l'alimentation en courant électrique est interrompue pendant moins de 2,0 s, de préférence moins de 1,0 s, préférablement moins de 0,5 s, encore plus préférablement entre 0,05 s et 0,2 s, ou est maintenue au niveau du courant électrique de fonctionnement.

5. Procédé selon l'une quelconque des revendications précédentes,
**caractérisé en ce que**
la durée du glissement est ajustée de telle sorte qu'un régime de sortie varie de moins de 30 %, de préférence de moins de 25 %, préférablement de moins de 20 %.

6. Procédé selon l'une quelconque des revendications précédentes,
**caractérisé en ce que**
le côté d'entraînement (2) est supporté par rapport au côté de sortie (6) par le biais d'au moins un palier à roulement (3) comprenant plusieurs corps de roulement (4), dont les corps de roulement (4), lorsque l'embrayage (1) est embrayé, ne roulent pas et **en ce que** les corps de roulement (4) roulent pendant la durée du glissement.

7. Embrayage électromagnétique (1), en particulier pour faire fonctionner un organe secondaire dans un véhicule automobile, comprenant une bobine magnétique (13) pouvant être alimentée en courant électrique, un palier à roulement, un côté d'entraînement (2) ainsi qu'un côté de sortie (6) pouvant être accouplé à celui-ci, avec des moyens de commande pour faire varier l'alimentation en courant électrique de la bobine magnétique (13) pour provoquer un glissement entre le côté d'entraînement (2) et le côté de sortie (6), avec des moyens de détection (17) réalisés de manière à conduire des signaux avec les moyens de commande (14), pour la détection d'une variation notable du flux magnétique résultant du début du glissement et d'une augmentation de la fente de travail associée à celui-ci, ou d'une variation associée d'une grandeur physique, en particulier pour la détection d'une impulsion de courant électrique (18) ou d'une impulsion de tension, les moyens de commande (14) étant réalisés et prévus pour faire varier, en réaction à la détection de la variation du flux magnétique ou de la variation de la grandeur physique, l'alimentation en courant électrique de la bobine magnétique (13), pour fermer l'embrayage (1) et terminer le glissement, **caractérisé en ce que** la durée du glissement est ajustée de telle sorte que le côté d'entraînement (2) et le côté de sortie (6) pendant le glissement tournent l'un par rapport à l'autre de moins de 1080°, de préférence de moins de 720°, préférablement de moins de 360°.

8. Embrayage (1) selon la revendication 7,
**caractérisé en ce que**
les moyens de détection (17) comprennent une bobine de détection pour détecter la variation du flux magnétique, en particulier dans le circuit électrique de la bobine magnétique (16), ou **en ce que** les moyens de détection comprennent un dispositif de mesure de courant ou de tension disposé dans le circuit électrique de la bobine magnétique (16).

9. Embrayage (1) selon la revendication 8,
**caractérisé en ce que**
les moyens de mesure de courant présentent une résolution de mesure d'au moins 15 mA, de préférence d'au moins 5 mA.

10. Embrayage (1) selon l'une quelconque des revendications 7 à 9,
**caractérisé en ce que**
les moyens de commande (14) comprennent un microcontrôleur et les moyens de détection (17) comprennent un convertisseur A/N qui est connecté au microcontrôleur de manière à conduire des signaux, de préférence qui est intégré dans celui-ci.

11. Embrayage (1) selon l'une quelconque des revendications 7 à 10,
**caractérisé en ce que**
le côté d'entraînement (2) est supporté par rapport au côté de sortie (6) par le biais d'au moins un palier à roulement (3) comprenant plusieurs corps de roulement (4), dont les corps de roulement (4), lorsque l'embrayage (1) est embrayé, ne roulent pas et **en ce que** les corps de roulement (4) roulent pendant le glissement entre le côté d'entraînement et le côté de sortie (2, 6) .
